# EUROPÄISCHE PATENTSCHRIFT

(11) **EP 1 024 325 B1**
(45) Veröffentlichungstag und Bekanntmachung des Hinweises auf die Patenterteilung: **14.11.2007**
(21) Anmeldenummer: 00101440.6
(22) Anmeldetag: 25.01.2000
(51) Int. Cl.: F16L 58/06, B28B 19/00, F16L 9/153, B28B 21/72

(54) **Vorrichtung und Verfahren zur Ummantelung von Leitungsrohren**
Device and method for covering pipes
Dispositif et procédé pour le revêtement de canalisations

(30) Priorität: 26.01.1999 DE 19902996
(43) Veröffentlichungstag der Anmeldung: 02.08.2000
(73) Patentinhaber: GLS Muenchen, Baugesellschaft mbH, 80687 München (DE)
(72) Erfinder: Wall, Edmund, 4300 St. Valentin (AT)
(74) Vertreter: Grünecker, Kinkeldey, Stockmair & Schwanhäusser Anwaltssozietät

(56) Entgegenhaltungen:
- WO-A-96/16790
- CH-A- 391 407
- FR-A- 2 307 213
- GB-A- 1 462 888
- PATENT ABSTRACTS OF JAPAN vol. 1998, no. 14, 31. Dezember 1998 (1998-12-31) & JP 10 231990 A (TAISEI CORP), 2. September 1998 (1998-09-02)

## Beschreibung

Die Erfindung betrifft eine Vorrichtung und ein Verfahren für die Ummantelung von Leitungsrohren, insbesondere von Stahlrohren für den Dükerbau.

Aus der GB-A-1462888 ist bereits ein Verfahren zur Ummantelung von Rohren bekannt, wobei der Zement auf ein Rohr aufgebracht wird, wonach ein Band mit Abstandshaltern um den Zement gewickelt wird.

Aus der Druckschrift CH 391407 ist bereits eine Schutzhülle mit Kugelkalotten bekannt, die um ein Rohr herum angebracht ist. Die Kugelkalotten dienen dazu, Hohlräume zum Ablaufen von Leckflüssigkeit zu bilden.

Aus der FR 2307213 ist eine flexible Schutzumwicklung für Rohre bekannt.

Aus der Druckschrift WO-A-9616790 ist bereits eine zylinderförmige Einlage mit hervorstehenden Abstandsteilen, die in ein Rohr eingebracht wird, bekannt. Zement wird in die Hohlräume zwischen der Einalge und dem Rohr gefüllt. Bekanntermaßen werden im Dükerbau zum Untergraben von Hindernissen, wie Flüssen oder Seen, Rohrleitungen insbesondere aus Stahl verwendet, die mit einer Ummantelung zum mechanischen Schutz, z.B. gegen Zugspannungen, versehen sind.

Zum einen ist dabei bekannt, als Schutzummantelung eine Betonummantelung mit einer Armierung aus Stahl zu verwenden. Dabei entsteht allerdings das Problem, dass beim unterirdischen Einbringen der ummantelten Rohre der Stahl der Armierung durch Reibung oder sonstiges mechanisches Einwirken den Beton der Ummantelung, d.h. die Isolierung bzw. Schutzschicht der Rohrleitung beschädigen kann.

Alternativ wird auch eine nicht armierte Betonumhüllung als Schutzumhüllung verwendet. Bei deren Herstellung wird, wenn der das Leitungsrohr ummantelnde Beton noch nicht vollständig ausgehärtet ist, ein Kunststoffseil spiralförmig unter Spannung um den Beton gewickelt und dieser anschließend ausgehärtet. Zwar ist dieses Verfahren schonender für die Isolierung, d.h. die Ummantelung der Rohrleitungen, allerdings ist das Herstellungsverfahren recht aufwendig.

Beiden Alternativen haftet zudem der Nachteil an, dass sich das Gewicht und die Materialverteilung der Betonummantelung beim Herstellungsprozess nicht auf einfache Weise mit ausreichender Genauigkeit einstellen lässt. Dies ist insbesondere von Nachteil, wenn die Schutzummantelung auch zur genau einzuhakenden Ballastierung einer unter Wasser zu verlegenden Rohrleitung dient.

Die Aufgabe der Erfindung ist es daher, eine Vorrichtung für eine auf einfache Weise präzise herstellbare Ummantelung und ein Verfahren zu seiner Herstellung zur Verfügung zu stellen.

Gelöst wird diese Aufgabe durch ein Verfahren zur Ummantelung nach Anspruch 1 und eine Stützvorrichtung mit den Merkmalen des Anspruchs 9. Vorteilhafte Ausführungsformen sind Gegenstand von Unteransprüchen.

Das erfindungsgemäße Verfahren nach Anspruch 1 bietet insbesondere den Vorteil, dass die Ummantelung auf besonders einfache und reproduzierbare Weise herstellbar ist, indem der fließfähige Beton in den Hohlraum eingefüllt wird, dessen Volumen durch die erfindungsgemäße Stützvorrichtung definiert ist, die um das zu ummantelnde Leitungsrohr herumgewickelt ist.

Dabei umfasst die Stützvorrichtung mindestens eine biegbare flächige Grundstruktur, an der Distanzelemente zur Festlegung der Dicke der Ummantelung angebracht sind. Insbesondere durch Wahl der Länge der Distanzelemente der Stützvorrichtung kann der Beton in einer durch die Stützvorrichtung definierter Menge eingefüllt werden, deren Masse weitgehend exakt bestimmbar und einhaltbar ist. Da die Stützvorrichtung eine biegsame Grundstruktur umfasst, kann die Stützvorrichtung leicht an den Querschnitt des zu ummantelnden Rohres angepasst werden, wobei zudem keine Gefahr mehr besteht, daß die Isolierung der Leitungsrohre beschädigt wird. Dabei ist es nicht erforderlich, dass das zu umwickelnde Rohr einen kreisringförmige Querschnitt hat. Vielmehr können mit diesem System auch ovale, eckige, runde und andere Formen bzw. Mantelstärken ummantelt werden. Wenn z.B. auf einem kreisrunden Rohr für das Ableiten von Abwasser gleichzeitig auch noch dünnere Rohre, wie z.B. Kabelschutzrohre, mit verlegt werden sollen, können diese zusammen mit dem Ableitungsrohr mit dem erfindungsgemäßen Ummantelungssystem umhüllt werden.

Insbesondere bei der Herstellung von Einziehdükern, die im elastischen Radius des Rohres eingezogen werden, kann es von Vorteil sein, wenn das zu ummantelnde Leitungsrohr mit einer nachgiebigen Lage, z.B. aus Filz oder Vlies ummantelt wird, die zwischen Rohr und der Stützvorrichtung zu liegen kommt. Diese nachgiebige, bevorzugt elastische Schicht aus einem Vlies oder Filzmaterial ermöglicht eine gewisse Elastizität beim Verlegen zwischen Rohr und Betonummantelung, so dass Sprünge im Betonmantel vermieden werden. Die Dicke der Lage wird je nach Anwendungsfall errechnet. Sie beträgt im Allgemeinen zwischen 5 und 3 cm. In diesem Fall ist es auch von Vorteil, wenn in Längsrichtung der Leitungsrohre beabstandete Fugen in der Stützvorrichtung belassen werden, die mit einer nachgiebigen Fugeneinlage, z.B. Moosgummi, versehen bzw. aufgefüllt werden.

Auch hierdurch wird eine gewisse Biegbarkeit des gesamten zu verlegenden Dükers gewährleistet, ohne dass zu große Spannungen in den Betonmantel eingetragen werden. Es wird dadurch die Biegebelastung an den einzelnen Betonsegmenten sehr gering gehalten. Bevorzugt können die Fugen großzügig bemessen werden, beispielsweise mit der dreifachen rechnerischen notwendigen Fugenstarke. In einer weiteren vorteilhaften Ausgestaltung des Verfahrens wird in der Stützvorrichtung eine Einziehhilfe verlegt. Als Einziehhilfe kann beispielsweise ein Zugseil, insbesondere ein Polyesterseil in Frage kommen, dieses Polyesterseil wird lose bzw. schlaff in der Stützvorrichtung verlegt und verbindet sich dann mit dem Beton kraftschlüssig. In diesem Zusammenhang wird bevorzugt ein Polyesterseil eingesetzt, das aufgrund seiner Oberfläche eine Verzahnung zwischen Beton und Seil bewirkt. Dies kann man durch Anordnung und Schaffung von Seilknoten noch erhöhen. Am Ende des Betonmantels kann hier eine Stoppscheibe angeschweißt sein, an der das Seil angreift. Über diese Scheibe können dann die Kräfte in das Rohr bei der Verlegung eingeleitet werden.

Bei schweren Dükern oder bei Dükern mit stärkerem Betonmantel kann anstelle eines Seiles durch die Stützvorrichtung ein Kunststoffleerrohr verlegt werden und für das Einziehen solcher Düker wird dann durch das Kunststoffleerrohr ein geeignetes Stahlseil eingezogen und das Stahlseil in Dükerziehkopf verankert und mit einer berechneten Kraft vorgespannt. Die Vorspannkraft sollte größer als die maximal während des Einziehvorgangs eingeleitete Kraft sein. Im Dükerende kann eine dem Betonummantelungsquerschnitt entsprechende Stahlscheibe befestigt sein. Über diese Stahlscheibe wird dann die Krafteinleitung in den Betonmantel gleichmäßig gewährleistet, d.h., die beim Dükereinziehen entstehenden Zugkräfte müssen nicht in das Produktendrohr eingeleitet werden, sondern werden von dem Stahlseil bzw. bei kleineren Dükern von dem Polyesterseil aufgenommen.

Bevorzugt wird hierbei die Stützvorrichtung weitgehend spiralförmig um das Leitungsrohr gewickelt. Durch das spiralförmige Umwickeln mit der Stützvorrichtung kann eine Stützvorrichtung um Leitungsrohre mit unterschiedlichen Querschnitten gewickelt werden. Somit kann eine einfache Durchmesseranpassung durch spiralförmiges Umwickeln erfolgen, ohne dass die Stützvorrichtungen selbst einem bestimmten Rohrdurchmesser entsprechend ausgelegt sein muss.

Vorteilhafterweise wird das zu ummantelnde Leitungsrohr, d.h., die äußere Leitungsrohroberfläche so mit der Stützvorrichtung umwickelt, dass die Distanzelemente weitgehend in Kontakt mit dem Leitungsrohr sind und die biegbare flächige Grundstruktur somit beabstandet von dem Leitungsrohr angebracht ist. In diesem Fall kann besonders einfach der zu füllende Hohlraum in der Stützvorrichtung erzeugt werden, wobei der Kontakt der Distanzelemente mit dem Leitungsrohr ein stabiles Anbringen der Stützvorrichtung unterstützt und bei Kenntnis der geometrischen Anordnung der Stützvorrichtung ein einfaches Bestimmen der einfüllbaren Betonmasse erlaubt.

In einer bevorzugten Ausführungsform erfolgt das Abdichten der Stützvorrichtung auf einfache Weise, indem die Stützvorrichtung, die um das Leitungsrohr gewickelt ist, mit Klebeband dicht umwickelt wird.

Vorteilhaft kann die Stützvorrichtung in mehreren Lagen gewickelt werden. D.h., zuerst wird eine erste Grundstruktur als erste Lage um die Ummantelung des Leitungsrohres gewickelt und anschließend mindestens eine weitere Grundstruktur um die bereits angebrachte(n) Lage(n) gewickelt. Danach wird die äußerste dieser Grundstrukturen nach außen hin weitgehend abgedichtet. Hierdurch kann auch bei größeren Ummantelungsdicken ein mechanisch stabiles Anbringen der Stützvorrichtung erfolgen. Ist nur eine begrenzte Auswahl von Stützvorrichtungen mit Distanzelementen unterschiedlicher Dicken vorhanden, so sind zudem durch mehrlagiges Wickeln Ummantelungen mit weiteren, davon unterschiedenen Dicken realisierbar.

Gemäß der erfindungsgemäßen Stützvorrichtung kann auf einfache Weise eine Ummantelung mit wohl definierter Dicke hergestellt werden. Da die Distanzelemente an der biegbar ausgestalteten Grundstruktur befestigt sind, kann die Stützvorrichtung mechanisch leicht um das zu ummantelnde Leitungsrohr herum gewickelt werden. Gemäß der vorliegenden Erfindung sind die Distanzelemente im Wesentlichen senkrecht zu den Verbindungsstegen auf diesen Verbindungsstegen angeordnet. Durch dieses Anbringen der Distanzelemente senkrecht zu den Verbindungsstegen kann auf besonders einfache Weise die Dicke der Ummantelung festgelegt werden. Wenn die Stützvorrichtung um das zu ummantelnde Leitungsrohr gewickelt ist, sind die entsprechenden Distanzelemente radial angeordnet, so dass man durch Wahl der Länge der einzelnen Distanzelemente unmittelbar die Dicke der Ummantelung an dieser Stelle festlegen kann. Dadurch, dass die Distanzelemente direkt auf den Verbindungsstegen angebracht werden, kann zudem der Zwischenraum zwischen den Verbindungsstegen groß gehalten werden, so dass die Stützvorrichtung nur ein geringes Gewicht hat. Werden weiterhin die Distanzelemente an den Verbindungsstellen zwischen den einzelnen Verbindungsstegen angebracht, so können diese Verbindungsstellen besonders stabil und mechanisch fest ausgestaltet werden, während die Verbindungsstege an sich biegbar sind.

Vorteilhafterweise sind die Distanzelemente dabei beabstandet voneinander an der biegbaren, flächigen Grundstruktur angebracht und stehen diese über. Weil die einzelnen Distanzelemente räumlich beabstandet an der Grundfläche angebracht werden, ist die biegbare Ausgestaltung der Grundstruktur, die insbesondere in den Zwischenräumen zwischen den einzelnen Distanzelementen zur Anpassung an die Leitungsrohrform notwendig ist, einfach zu verwirklichen.

Dadurch, dass zudem die Distanzelemente von der Grundstruktur hervorragen, kann die Länge dieses Hervorragens auf einfache Weise ein Maß für die Dicke der Ummantelung festlegen, insbesondere wenn zusätzlich die hervorragenden Enden der Distanzelemente in Kontakt mit der zu ummantelnden Leitungsrohroberfläche gebracht werden.

Sind die Distanzelemente Distanzstäbe, deren Länge im Allgemeinen größer als der Durchmesser ist, so benötigen die Distanzelemente nicht viel Platz, d.h. zwischen mehreren Distanzstäben ist ein vergleichsweise großem Zwischenraumanteil möglich. Dies ist besonders dann von Vorteil, wenn bei der Ummantelung der Leitungsrohre dieser Zwischenraum mit Beton gefüllt wird, der somit einem großen Raumanteil ausfüllt, was aus Stabilitätsgründen erwünscht ist.

Eine erfindungsgemäße besonders leicht biegbare flächige Grundstruktur umfasst gitterförmig angeordnete Verbindungsstege. Weiterhin kann sich in den Zwischenräumen zwischen den einzelnen Verbindungsstegen der Ummantelungsbeton leicht ansammeln und nach Aushärten eine besonders gute, mechanisch stabile Verbindung des Betons mit der Stützvorrichtung eingehen.

In einer vorteilhaften Ausführungsform wird dabei die Stützvorrichtung, insbesondere die biegbare flächige Grundstruktur und die Distanzelemente, einteilig aus einem Kunststoff gegossen. Durch das einteilige Giessen kann man auf einfache Weise die erfindungsgemäße Stützvorrichtung reproduzierbar herstellen, wobei durch Wahl geeigneter Kunststoffe eine besonders leichte und einfach biegbare Vorrichtung realisiert werden kann.

Vorteilhafterweise umfassen die biegbaren flächigen Grundstrukturen Verbindungselemente wie Laschen oder dergl., mit denen mehrere biegbare flächige Grundstrukturen mechanisch miteinander verbindbar sind. Indem somit die Stützvorrichtung aus einzelnen Bestandteilen zusammengesetzt werden kann, können aus verschiedenen Grundstrukturen mit gegebenen Abmessungen auf einfache Weise Stützvorrichtungen mit problemspezifisch erforderlichen Abmessungen zusammengesetzt werden.

Wenn die Seite der biegbaren flächigen Grundstruktur, auf der keine Distanzelemente befestigt sind, d.h., die frei von angebrachten Distanzelementen ist, weitgehend als glatte Fläche ausgestaltet ist, kann diese Seite leicht mit Klebeband oder dergl. beklebt werden, wie es z.B. beim erfindungsgemäßen Verfahren zum Abdichten der Stützvorrichtung notwendig sein kann.

Die Erfindung wird im Folgenden anhand der in den Zeichnungen dargestellten Ausführungsbeispiele weiter erläutert und beschrieben.

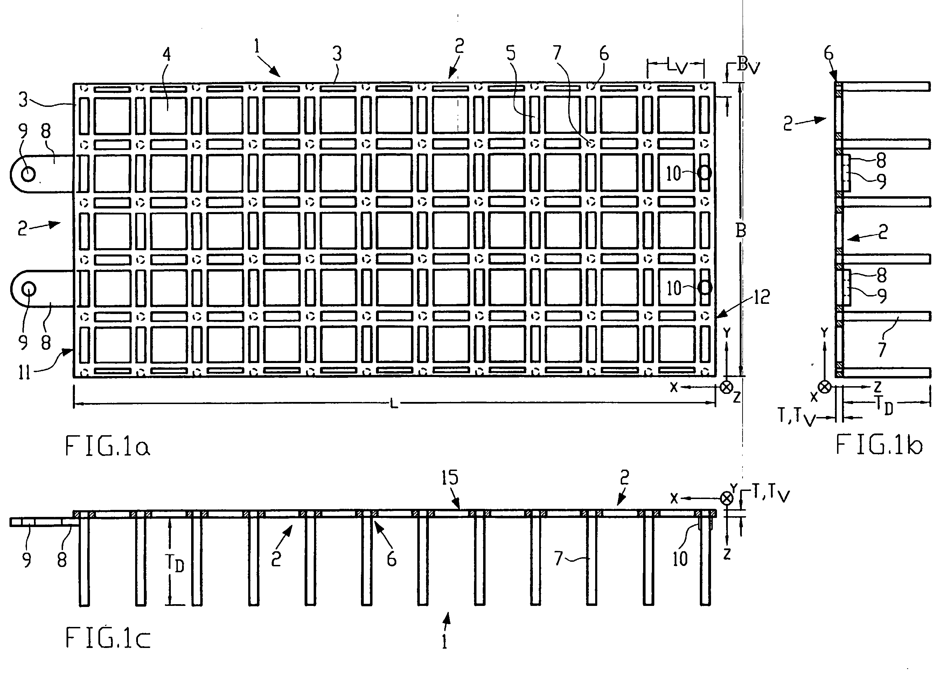

Es zeigt
- Figur 1a: eine Draufsicht von oben auf eine Stützvorrichtung nach einem ersten Ausführungsbeispiel,
- Figur 1 b: eine seitliche Ansicht entlang der Breitseite der in Figur 1 a dargestellten Stützvorrichtung,
- Figur 1 c: eine seitliche Ansicht entlang der Längsseite der in den Figuren 1 a und 1 b dargestellten Stützvorrichtung,

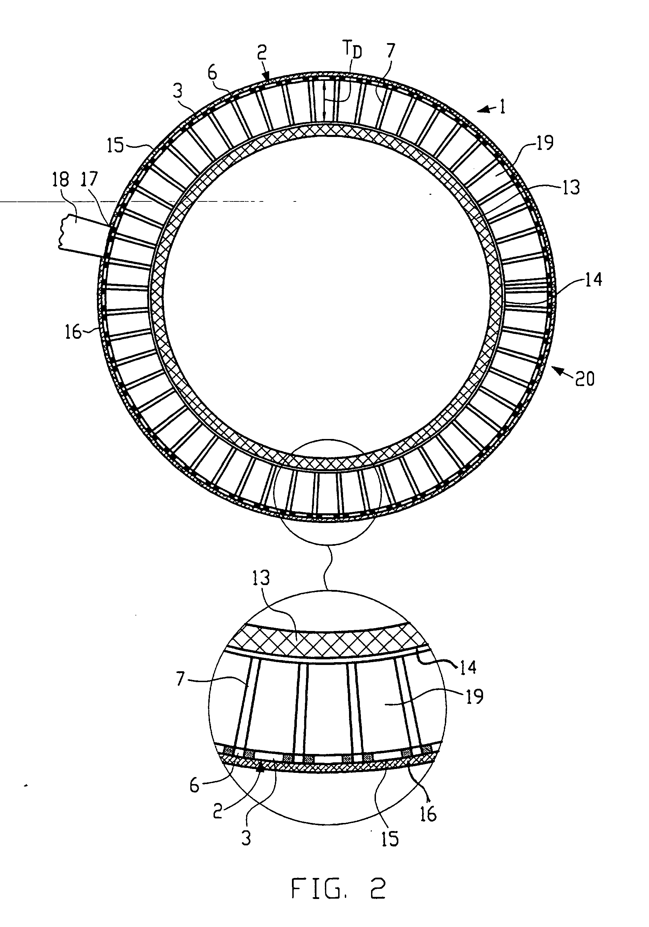

- Figur 2: eine Querschnittsansicht eines Leitungsrohres mit einer zur Herstellung der Ummantelung um das Leitungsrohr gewickelten Stützvorrichtung wie sie in den Figuren 1 a bis 1 c dargestellt ist,
- Figur 3: in einer Querschnittsansicht eine zweilagig um ein Leitungsrohr gewickelte Stützvorrichtung gemäß eines zweiten Ausführungsbeispiels, und
- Figur 4: in einer schematischen, perspektivischen Ansicht ein Leitungsrohr mit einer Ummantelung, das in einen Hohlkanal zur Aufnahme des Leitungsrohres eingezogen ist, wobei zur Herstellung der Ummantelung um das Leitungsrohr eine Stützvorrichtung verwendet wurde, wie in den Figuren 1a bis1c dargestellt ist,
- Figur 5: einen Teilausschnitt durch ein ummanteltes Leitungsrohr im Querschnitt gemäß einer weiteren erfindungsgemäßen Ausführungsform und
- Figur 6: einen Längsschnitt durch den Betonmantel mit Stützvorrichtung gemäß einem weiteren Ausführungsbeispiel.

In den Figuren 1a, 1b und 1c ist die detailliert dargestellte Stützvorrichtung insgesamt mit 1 bezeichnet. In einem im Folgenden zur Verdeutlichung verwendeten kartesischen Koordinatensystem zeigt Figur 1a die Stützvorrichtung 1 in der Draufansicht von oben, d.h., die X-Y-Ebene von oben, wobei die X-Richtung sich in Längsrichtung und die Y-Richtung sich in Richtung der Breite der Stützvorrichtung 1 erstreckt. Eine seitliche Ansicht auf die sich in die Tiefenrichtung Z erstreckende Stützvorrichtung 1, mit Blick auf die Breit- bzw. Längsseite, ist in den Figuren 1b bzw. 1c abgebildet.

Die Stützvorrichtung umfasst dabei eine im Wesentlichen flächige Grundstruktur 2, die eine Länge L von z.B. ca. 30 cm, eine Breite B von z.B. 14 cm und eine Tiefe T von z.B. 0,5 cm hat, wobei diese Angaben bevorzugt, aber nicht allein mögliche Maßzahlen darstellen. Die Grundstruktur 2 ist aus einem biegbaren Kunststoff gefertigt. Wie insbesondere in Figur 1a zu erkennen ist, ist die Grundstruktur 2 gitterförmig aufgebaut. Sie besteht aus einzelnen Verbindungsstegen 3, die in der Längs- bzw. der Breitrichtung so angeordnet sind, dass sie in der Draufsicht von oben die rechteckig umrandete Fläche der Grundstruktur 2 in einzelne Quadrate 4 aufteilen, deren Seiten jeweils als Gitter durch eines dieser Verbindungsstege 3 gebildet ist. Die von vier Verbindungsstegen 3 umschlossene quadratische Fläche 4 bleibt dabei frei.

Die parallel oder rechtwinkelig zueinander angeordneten Verbindungsstege 3 haben dabei jeweils eine Steglänge Lᵥ von z.B. ca. 2 cm, eine Stegbreite Bᵥ von z.B. ca. 2 cm und eine Tiefe Tᵥ in Z-Richtung von z.B. ca. 0,5 cm. Diese Tiefe Tᵥ der die Grundstruktur 2 bildenden Verbindungsstege 3 bestimmen damit auch die Tiefe T der Grundstruktur 2. Die Aussenseiten der umschlossenen quadratischen Fläche 4 haben demnach jeweils etwa eine Länge von Lv.

Jeder Verbindungssteg 3 hat dabei selbst zusätzlich noch einen quaderförmigen freien Innenbereich 3 mit rechtwinkeligen Außenmaßen in der X-Y-Ebene, der ebenso wie der freie quadratische Zwischenbereich 4 zwischen den einzelnen sich gegenüber liegenden Verbindungsstegen 3 einen freien Durchgang durch die Grundstruktur 2 in Tiefenrichtung Z erlaubt.

An allen Verbindungsstellen 6, an denen mindestens zwei der die Grundstruktur 2 bildenden Verbindungsstege 3 zusammenlaufen, ist senkrecht dazu jeweils ein Distanzelement 7 angebracht. Das Distanzelement 7 ist ein länglicher, sich in Z-Richtung erstreckender Distanzstab 7, der um eine Tiefe T_{D} von z.B. ca. 5 cm über die Grundstruktur 2 herausragt. Die einzelnen Distanzstäbe 7 sind beabstandet voneinander in einer Entfernung L_{V} in dem Raster der Grundstruktur 2 angebracht.

Die Distanzstäbe 7 sind ebenfalls aus Kunststoff gefertigt und zusammen mit der flächigen Grundstruktur 2 einteilig in einem Gießverfahren hergestellt worden. Alternativ können die Distanzstäbe 7 natürlich auch nachträglich an die bereits hergestellte Grundstruktur 2 befestigt werden, wobei die Distanzstäbe aus einem formstabileren Material zur Erhaltung der Formstabilität geschaffen sein können.

An dem linken Seitenrand 11 entlang der Breitseite in Y-Richtung sind an der Grundstruktur 2 in dieser Richtung beabstandet voneinander Laschen 8 befestigt. Diese Laschen 8 stehen in X-Richtung die Grundstruktur 2 über und haben ein Durchgangsloch 9 in der Laschenfläche. Die Laschen 8 sind an der linken Seite 11 der Grundstruktur 2 so angebracht, dass sie in zwei jeweils auf der rechten Seite 12 angebrachte Gegenstifte 10 einer zweiten Grundstruktur eingreifen können, um so diese beiden Grundstrukturen miteinander zu verbinden. D.h., durch geeignete Wahl der Positionierung der Laschen und der Gegenstifte auf evtl. unterschiedlich dimensionierten Grundstrukturen können Stützvorrichtungen unterschiedlicher Abmessungen aus den einzelnen gegebenen Grundstrukturen zusammengesetzt werden. Die Laschen 8 und die Gegenstifte 10 sind wiederum aus Kunststoff und zusammen mit der Grundstruktur und den Distanzstäben einteilig gegossen.

Mit dieser Stützvorrichtung lässt sich das erfindungsgemäße Verfahren, wie folgt durchführen:

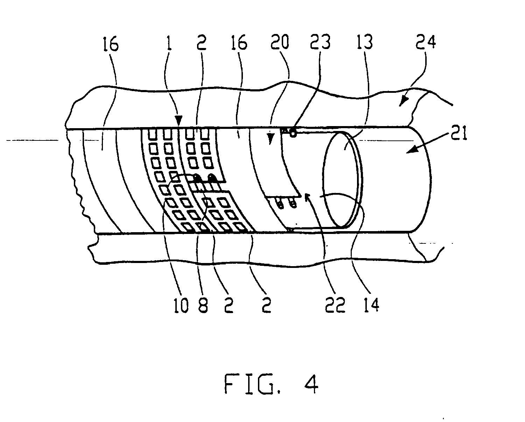

Zunächst wird aus einzelnen Stützvorrichtungselementen 1, wie sie in der Figur 1a, b, c dargestellt sind, deren Länge jeweils ca. 30 cm betragen kann, durch aneinanderhängen von mehreren solcher Vorrichtungen über die Laschen 8 ein Strang geeigneter Gesamtlänge gebildet, so dass abhängig vom Rohrdurchmesser einer zu ummantelnden Rohrleitung und der Länge der zu ummantelnden Strecke ein Strang geeigneter Länge entsteht. Dieser Strang wird dann bevorzugt spiralförmig um das Rohr an der gewünschten Stelle herumgewickelt, so dass, wie das Figur 4 zeigt, sich eine geschlossene Ummantelung aus Stützvorrichtungen 1 über eine gewünschte Erstreckungslänge auf der Rohroberfläche ergibt. Die Grundstruktur 2 kommt dabei konzentrisch zur der Leitungsrohroberfläche 14 um das Leitungsrohr 13 herum durch die Distanzstäbe 7 beabstandet zu liegen.

Nach dem Umwickeln des Leitungsrohres 13 mit dem Stützvorrichtungsstrang wird die außenliegende Oberfläche 15 der Grundstruktur 2, auf der keine Distanzstücke 7 vorhanden sind und die im Wesentlichen durch glatte oder flache Ausbildung der Stegoberflächen geprägt ist, vollständig mit Klebeband 16 umwickelt. Das Klebeband haftet dabei auf den Stegoberflächen durch diese Umwickelung wird die Oberfläche der Grundstruktur vollständig verschlossen.

Dadurch entsteht zwischen der Leitungsrohroberfläche, die von einer Schutzschicht 14 üblicherweise umgeben ist, ein ringförmiger hohler Zwischenraum 19, der beidseitig also nach außen und innen hin abgedichtet ist. Die Dicke dieses Zwischenraumes wird durch die Länge der Distanzstäbe 7 definiert.

Im nächsten Schritt wird in die nun von dem Klebeband gebildete Oberfläche an einer oder mehreren geeigneten Stellen eine Öffnung 17 (z.B. durch Aufschneiden des Klebebandes 16) erzeugt und dort ein Steiger, d.h. ein Einfüllstutzen 18 zum Einfüllen von fließfähigem Beton angebracht. Selbstverständlich kann die Öffnung 17 auch beim Umwickeln mit Klebeband bereits erzeugt werden, indem diese Stelle nicht beklebt wird.

In dem Hohlraum wird nun durch den Steiger 18 ein geeigneter, fließfähiger Beton - ggf. unter Einsatz von Außenrüttlern während des Betoniervorgangs - eingefüllt, der sich dann im abgedichteten Hohlraum 19 ausbreitet und diesen vollständig ausfüllt. Der Beton härtet dann aus. Der Steiger 18 kann abmontiert und auch ggf. das Klebeband wieder entfernt werden. Die auf diese Weise erzeugte Stützummantelung 20 hat eine genau definierte Dikke, so dass deren Gewicht im voraus exakt berechnet werden kann, so dass sich eine auch gewichtsmäßig genau vorausberechenbare Ballastierung erzeugen lässt. Evtl. durch Wärmeschwankungen verursachte Dehnungen des Betons werden über die Kunststoffstege aufgefangen. Spezielle Dehnfugen müssen daher nicht eingebracht werden.

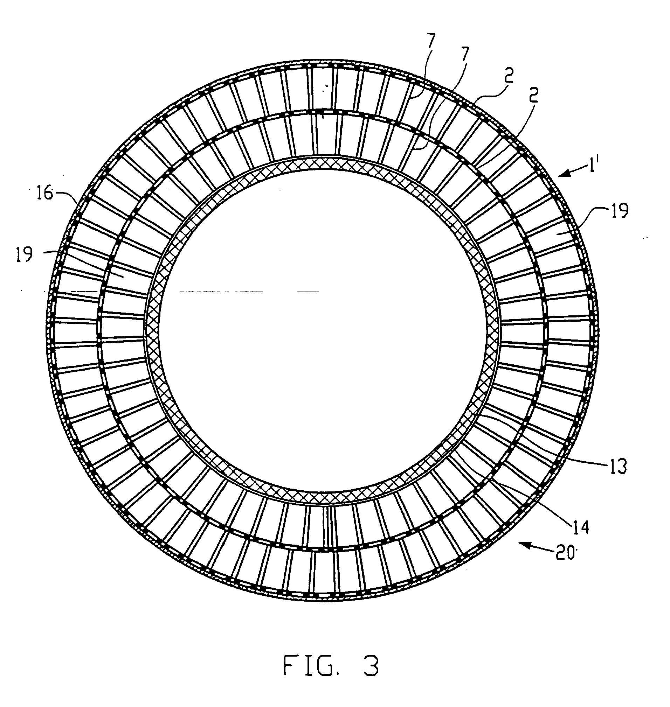

Bei dem in Figur 3 dargestellten Ausführungsbeispiel ist die Stützvorrichtung zweilagig erzeugt, indem zwei Stützvorrichtungsstränge 1' übereinandergewickelt wurden. Zur Abdichtung muss hier nur die äußere Oberfläche der mehrlagigen Stützvorrichtung, d.h. die äußere Seite der außen angeordneten Grundstruktur 2 mit Klebeband 16 umwickelt werden. Der dann in analoger Weise, wie zuvor beschrieben, eingefüllt Beton verteilt sich dann auch in der darunterliegenden Lage.

Mit dem erfindungsgemäßen Verfahren und dem erfindungsgemäßen Stützgitter ergibt sich dann eine Ummantelung 20 für ein Leitungsrohr 13, wie es in Figur 4 noch einmal dargestellt ist. Dort ist das Leitungsrohr in einen Hohlkanal 21 des Erdreiches 24 eingezogen (in der Figur von links nach rechts). Um beim Einziehen ein Verrutschen der Ummantelung 20 auf der Oberfläche des Leitungsrohres zu verhindern, kann ein Stoppelement 23 am Ende 22 der Ummantelung auf der Rohroberfläche angeordnet werden, so dass ein Abgleiten der Betonummantelung beim Einziehen des Rohres verhindert wird. Zur Erleichterung des Einziehens kann weiterhin eine nicht näher dargestellte Stahlblechunterlage in dem Hohlkanal 21 zuvor eingezogen worden sein, um ein besseres Gleiten des ummantelten Rohres zu erzielen.

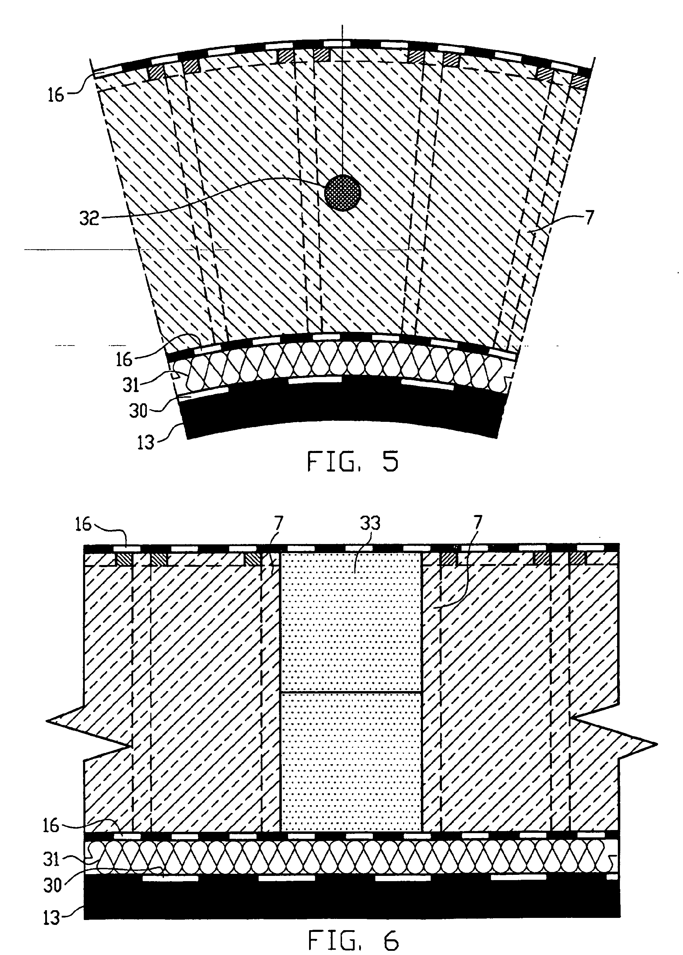

Bei dem in Figur 5 dargestellten Ausführungsbeispiel wird auf das Rohr, besser den Rohrmantel 13, der mit einer Polyethylenisolierungsschicht 30 überzogen ist, eine nachgiebige Schicht 31 aus Vlies oder Filzmaterial aufgebracht. Diese Vliesschicht ist wiederum mit Klebeband 16 umwickelt, auf dem sich dann die Grundstruktur mit den Distanzstäben 7 abstützt. Im Unterschied zu den zuvor dargestellten Ausführungsbeispielen wird hier also das Rohr 13 noch mit einer nachgiebigen Schicht 31 ummantelt, so dass eine Verwendung als Einziehdüker, der im elastischen Radius des Rohres eingezogen wird, möglich ist. Durch die Stützvorrichtung ist außerdem ein in Längsrichtung des Rohres verlaufendes Seil 32 (um 180° versetzt; gegenüberliegend kann ein weiteres Seil vorhanden sein) eingezogen, das mit dem Beton aushärtet und somit fest dort aufgenommen ist. An den herausstehenden Enden kann dieses Seil dann für das Einziehen des Dükers zur Krafteinleitung mit verwendet werden. Bei einer anderen nicht dargestellten Ausführungsform ist anstelle des Seiles 32 ein Leerrohr mit in den Beton eingebettet, durch das ein Stahlseil hindurchgezogen werden kann. Diese Variante wird bevorzugt beim Einzug von schwereren Dükern vorgesehen.

In Figur 6 ist zu sehen, dass in dem dort dargestellten Längsschnitt die Ummantelung durch die Stützvorrichtung an einer Stelle unterbrochen ist und dort eine Fuge erzeugt ist, in die elastisches Material, insbesondere Moosgummi 33 eingesetzt ist. Dieser Moosgummi erleichtert das Einziehen unter Biegung, weil die rechts und links des Moosgummis angrenzenden Betonabschnitte dadurch einen gewissen Bewegungsspielraum gegeneinander im Sinne einer Verbiegung des Rohres haben, so dass eine gewisse Verbiegbarkeit des Gesamtrohrstranges sichergestellt ist. Solche Fugen können in bestimmten, geeigneten Abschnitten, z.B. von 2 bis 4 m, vorgesehen sein. Diese Maßnahme kann für sich allein oder auch in Kombination mit der elastischen Lage 31 das Einziehen von Einziehdükem im elastischen Radius des Rohres erleichtern.

Das erfindungsgemäße Ummantelungssystem einer Rohrleitung hat wesentliche Vorteile. Zum einen lässt sich durch Aneinanderhängen einzelner, wie in Figur 1 dargestellter Stützelemente ein beliebig langer Stützvorrichtungsstrang erzeugen, der dann spiralförmig das Rohr umgeben kann, so dass mit ein und demselben Grundelement, nämlich der in Figur 1 dargestellten Stützgitterstruktur, Leitungen beliebigen Durchmessers ummantelt werden können. Durch die definierbare Länge der Stützstege wird das Gesamtvolumen im Voraus berechenbar, so dass eine genaue gewichtsmäßige Dimensionierung der Ummantelung möglich ist. Die Gitterstruktur ist insgesamt billig in der Herstellung und einfach in der Handhabung. Wenn sie aus Kunststoff erzeugt ist, schluckt sie außerdem Dehnungen des Betons, so dass die Erzeugung spezieller Dehnfugen nicht erforderlich ist.

Des Weiteren werden bei diesem Ummantelungssystem nur nicht-metallische Werkstoffe verwendet. Als Isolierwände, mit denen die verlorene Schalung bzw. die Einlagen und die Stützstruktur fixiert werden, können solche eingesetzt werden, die im Piplinebauwerk bereits erprobt sind (z.B. sogen. Denso-Binden).

Die gitterförmige Stützstruktur gewährleistet einen guten Verbund zwischen Kunststoff und Beton, so dass ein Abplatzen des Betonmantels unmöglich ist. Darüber hinaus lässt sich die Stützstruktur an alle möglichen Formen und Mantelstärken anpassen und kann z.B. auch zur Mitummantelung von Kabelstützrohren, welche am Außenumfang des Ableitungsrohres montiert werden, eingesetzt werden. Schließlich lässt sich dieses System auch einsetzen, um Ummantelungen, die in größeren Betonstärken gewünscht sind, mehrlagig mit dem gleichen System zu erzeugen.

## Patentansprüche

1. Verfahren zur Ummantelung von Leitungsrohren (13), insbesondere von Stahlrohren für den Dükerbau, unter Verwendung mindestens einer Stutzvorrichtung (1) mit mindestens einer biegbaren flächigen Grundstruktur (2), an der Distanzelemente (7) zur Festlegung der Dicke (T_{D}) der Ummantelung (20) angebracht sind, mit folgenden Schritten:
• Umwickeln des zu ummantelnden Leitungsrohres (13) mit der Stutzvorrichtung (1);
• Einfüllen von fliessfähigem Beton in die Stützvorrichtung (1), die vorher zur Schaffung eines mit dem fliessfähigen Beton zu füllenden Hohlraums (19) nach außen hin bis auf eine Öffnung (17) zum Einfüllen weitgehend abgedichtet wird;
• Aushärten des Betons in der Stutzvorrichtung (1).

2. Verfahren nach Anspruch 1,
**dadurch gekennzeichnet, dass**
die Stützvorrichtung (1) weitgehend spiralförmig um das Leitungsrohr (13) gewickelt wird.

3. Verfahren nach Anspruch 1 oder 2,
**dadurch gekennzeichnet, dass**
das zu ummantelnde Leitungsrohr (13) so mit der Stützvorrichtung (1) umwickelt wird, dass die Distanzelemente (7) weitgehend in Kontakt mit dem Leitungsrohr (13) sind und die biegbare flächige Grundstruktur (2) beabstandet von dem Leitungsrohr (13) angeordnet ist.

4. Verfahren nach einem der Ansprüche 1 bis 3,
**dadurch gekennzeichnet, dass**
das Abdichten der Stützvorrichtung (1) durch Umwickeln der Stützvorrichtung (1) mit Klebeband (16) erfolgt.

5. Verfahren nach einem der Ansprüche 1 bis 4,
**dadurch gekennzeichnet, dass**
das zu ummantelnde Leitungsrohr (13) in mehreren Lagen von der Stützvorrichtung (1') umwickelt wird.

6. Verfahren nach wenigstens einem der vorangegangenen Ansprüche,
**dadurch gekennzeichnet, dass**
das zu ummantelnde Leitungsrohr mit einer nachgiebigen Lage, z.B. aus Filz oder Vlies, ummantelt wird, die zwischen Rohr und der Stützvorrichtung zu liegen kommt.

7. Verfahren nach wenigstens einem der Ansprüche 1 bis 6,
**dadurch gekennzeichnet, dass**
in Längsrichtung der Leitungsrohre beabstandet Fugen in der Stützvorrichtung belassen werden, die mit einer nachgiebigen Fugeneinlage, z.B. Moosgummi, gefüllt werden.

8. Verfahren nach wenigstens einem der vorangegangenen Ansprüche,
**dadurch gekennzeichnet, dass**
vor der Einfüllung des Betons durch die Stützvorrichtung eine Einziehhilfe verlegt wird.

9. Stützvorrichtung (1) für die Ummantelung von Leitungsrohren (13), insbesondere von Stahlrohren für den Dükerbau, mit mindestens einer biegbaren flächigen Grundstruktur (2), an der Distanzelemente (7) zur Festlegung der Dicke (To) der Ummantelung (20) angebracht sind, wobei die Distanzelemente (7) im Wesentlichen senkrecht zu gittenförmig angeordneten Verbindungsstegen (3) der Grundstruktur (2) auf den Verbindungsstegen (3) angeordnet sind.

10. Stützvorrichtung nach Anspruch 9,
**dadurch gekennzeichnet, dass**
die Distanzelemente (7) beabstandet voneinander an der biegbaren flächigen Grundstruktur (2) angebracht sind und diese überstehen.

11. Stützvorrichtung nach einem der Ansprüche 7 oder 10,
**dadurch gekennzeichnet, dass**
die Distanzelemente Distanzstäbe (7) sind.

12. Stützvorrichtung nach einem der Ansprüche 9 bis 11,
**dadurch gekennzeichnet, dass**
die Grundstruktur (1) zusammen mit den Distanzelementen einteilig aus Kunststoff gegossen ist.

13. Stutzvorrichtung nach einem der Ansprüche 9 bis 12,
**dadurch gekennzeichnet, dass**
die biegbare flächige Grundstruktur (2) Verbindungselemente (8) wie Laschen oder dergleichen umfasst, mit denen mehrere biegbare flächige Grundstrukturen (2) mechanisch verbindbar sind.

14. Stützvorrichtung nach einem der Ansprüche 9 bis 13,
**dadurch gekennzeichnet, dass**
die Seite (15) der biegbaren flächigen Grundstruktur (2), auf der keine Distanzelemente (7) angebracht sind, weitgehend als glatte Fläche ausgestaltet ist.

## Claims

1. Method for covering pipes (13), particularly steel pipes for siphon construction, using at least one support device (1) which comprises at least one flexible planar basic structure (2) to which spacing elements (7) are attached for fixing the thickness (T_{D}) of the covering (20), comprising the following steps:
• winding the support device (1) round the pipe (13) to be covered;
• filling the support device (1) with fluid concrete, said support device having previously, in order to create a hollow space (19) to be filled with the fluid concrete, been largely sealed against the outside except for an opening (17) for filling;
• hardening of the concrete in the support device (1).

2. Method according to claim 1, **characterised in that** the support device (1) is wound essentially helically round the pipe (13).

3. Method according to claim 1 or 2, **characterised in that** the pipe (13) to be covered is wound with the support device (1) such that the spacing elements (7) are largely in contact with the pipe (13) and the flexible planar basic structure (2) is arranged spaced from the pipe (13).

4. Method according to one of the claims 1 to 3, **characterised in that** the sealing of the support device (1) is carried out by winding adhesive tape (16) round the support device (1).

5. Method according to one of the claims 1 to 4, **characterised in that** the pipe (13) to be covered has the support device (1') wound round it in a plurality of layers.

6. Method according to at least one of the preceding claims, **characterised in that** the pipe to be covered is covered with a yielding layer, for example, of felt or fleece which comes to lie between the pipe and the support device.

7. Method according to at least one of the claims 1 to 6, **characterised in that** gaps are left in the support device, said gaps being spaced in the longitudinal direction of the pipe and being filled with a yielding gap filler, for example, microcellular rubber.

8. Method according to at least one of the preceding claims, **characterised in that** before the filling of the concrete, a drawing-in aid is laid through the support device.

9. Support device (1) for covering pipes (13), particularly steel pipes for siphon construction, comprising at least one flexible planar basic structure (2) to which spacing elements (7) are attached for fixing the thickness (T_{D}) of the covering (20), wherein the spacing elements (7) are arranged on and substantially perpendicularly to the connecting webs (3) of the basic structure (2), said connecting webs (3) being arranged in a grid form.

10. Support device according to claim 9, **characterised in that** the spacing elements (7) are attached to the flexible planar basic structure (2) spaced apart from one another and project beyond it.

11. Support device according to one of the claims 7 or 10, **characterised in that** the spacing elements are spacing bars (7).

12. Support device according to one of the claims 9 to 11, **characterised in that** the basic structure (1) is cast integrally with the spacing elements from plastics.

13. Support device according to one of the claims 9 to 12, **characterised in that** the flexible planar basic structure (2) comprises connecting elements (8) such as straps or the like with which a plurality of flexible planar basic structures (2) can be mechanically connected.

14. Support device according to one of the claims 9 to 13, **characterised in that** the side (15) of the flexible planar basic structure (2) to which no spacing elements (7) are attached, is essentially configured as a smooth surface.

## Revendications

1. Procédé pour le revêtement de canalisations (13), en particulier de tuyaux d'acier pour la construction de conduites souterraines, à l'aide d'au moins un dispositif de support (1) comportant au moins une structure de base (2) plane et flexible sur laquelle sont installés des éléments d'écartement (7) destinés à fixer l'épaisseur (T_{D}) du revêtement (20), avec les étapes suivantes :
- enroulement du dispositif de support (1) sur la canalisation (13) à revêtir ;
- déversement de béton fluide dans le dispositif de support (1) qui a été auparavant rendu étanche vers l'extérieur, à l'exception d'une ouverture (17) destinée au remplissage, afin de créer une cavité (19) à remplir avec le béton fluide ;
- durcissement du béton dans le dispositif de support (1).

2. Procédé selon la revendication 1, **caractérisé en ce que** le dispositif de support (1) est enroulé quasiment en spirale sur la canalisation (13).

3. Procédé selon la revendication 1 ou 2, **caractérisé en ce que** le dispositif de support (1) est enroulé sur la canalisation à revêtir (13) de telle sorte que les éléments d'écartement (7) soient largement en contact avec la canalisation (13) et que la structure de base (2) plane et flexible soit espacée de ladite canalisation (13).

4. Procédé selon l'une des revendications 1 à 3, **caractérisé en ce que** l'étanchéité du dispositif de support (1) est réalisée grâce à l'enroulement d'une bande adhésive (16) sur le dispositif de support (1).

5. Procédé selon l'une des revendications 1 à 4, **caractérisé en ce que** le dispositif de support (1') est enroulé en plusieurs couches sur la canalisation à revêtir (13).

6. Procédé selon l'une au moins des revendications précédentes, **caractérisé en ce que** la canalisation à revêtir est revêtue avec une couche souple, constituée par exemple de feutre ou d'une nappe de fibres, qui vient se placer entre la canalisation et le dispositif de support.

7. Procédé selon l'une des revendications 1 à 6, **caractérisé en ce qu'**on laisse dans le dispositif de support, espacés dans le sens longitudinal des canalisations, des joints que l'on remplit d'une garniture de joint souple, par exemple un caoutchouc cellulaire.

8. Procédé selon l'une au moins des revendications précédentes, **caractérisé en ce qu'**avant de verser le béton dans le dispositif de support, on pose un élément auxiliaire d'introduction.

9. Dispositif de support (1) pour le revêtement de canalisations (13), en particulier de tuyaux d'acier pour la construction de conduites souterraines, comportant au moins une structure de base (2) plane et flexible sur laquelle sont installés des éléments d'écartement (7) destinés à fixer l'épaisseur (T_{D}) du revêtement (20), les éléments d'écartement (7) étant disposés sur des bandes de liaison (3) en forme de grille de la structure de base (2), globalement perpendiculairement aux bandes de liaison (3).

10. Dispositif de support selon la revendication 9, **caractérisé en ce que** les éléments d'écartement (7) sont installés sur la structure de base (2) plane et flexible en étant espacés les uns les autres, et dépassent de celle-ci.

11. Dispositif de support selon la revendication 7 ou 10, **caractérisé en ce que** les éléments d'écartement sont constitués par des tiges d'écartement (7).

12. Dispositif de support selon l'une des revendications 9 à 11, **caractérisé en ce que** la structure de base (1) est coulée d'une seule pièce, en matière plastique, avec les éléments d'écartement.

13. Dispositif de support selon l'une des revendications 9 à 12, **caractérisé en ce que** la structure de base (2) plane et flexible comprend des éléments de liaison (8) tels que des pattes ou des éléments similaires, grâce auxquels plusieurs structures de base (2) planes et flexibles peuvent être reliées mécaniquement.

14. Dispositif de support selon l'une des revendications 9 à 13, **caractérisé en ce que** le côté (15) de la structure de base (2) plane et flexible sur lequel il n'y a pas d'éléments d'écartement (7) est conçu quasiment comme une surface lisse.
